# EUROPÄISCHE PATENTSCHRIFT

(11) **EP 1 977 092 B1**
(45) Veröffentlichungstag und Bekanntmachung des Hinweises auf die Patenterteilung: **01.07.2009**
(21) Anmeldenummer: 06828506.3
(22) Anmeldetag: 04.11.2006
(51) Int. Cl.: F01N 7/14, F02B 77/11, B60R 13/08, F01N 7/10

(54) **HITZESCHILD**
HEAT SHIELD
PARE-CHALEUR

(30) Priorität: 24.01.2006 DE 102006003229
(43) Veröffentlichungstag der Anmeldung: 08.10.2008
(73) Patentinhaber: Federal -Mogul Sealing Systems GmbH, 57562 Herdorf (DE)
(72) Erfinder: SPEER, Andreas, 51069 Köln (DE)
(86) Internationale Anmeldenummer: PCT/DE2006/001933
(87) Internationale Veröffentlichungsnummer: WO 2007/085213

(56) Entgegenhaltungen:
- EP-A- 1 316 691
- EP-A1- 1 528 231
- EP-A2- 1 548 246
- DE-A1- 4 111 245
- US-A1- 2003 101 719
- US-B1- 6 318 734

## Beschreibung

Die Erfindung betrifft ein aus mehreren Elementen zusammengesetztes Hitzeschild zur Abschirmung von unter Temperatureinfluss stehenden Bauteilen.

Es ist allgemein bekannt, zur Abschirmung von unter Temperatureinfluss stehenden Bauteilen, wie beispielsweise Fahrzeug-Abgaskrümmern oder dergleichen, Hitzeschilde zu verwenden. Thermische Längenänderungen des jeweiligen unter Temperatureinfluss stehenden Bauteiles können bei dem hier zum Einsatz gelangenden in starrer Verbindung eingesetzten üblicherweise einteiligen Hitzeschilden zum Ausfall führen. Insbesondere Abgaskrümmer können sich, unter Temperatureinfluss bis zu 5 mm, ausdehnen. Dadurch wird im Befestigungsbereich des Hitzeschildes eine Spannung auf das Hitzeschild impliziert, die durch zusätzliche Schwingungen im Abgasstrang zu Rissbildungen fuhren kann.

Hier kommen bedarfsweise Entkoppelungselemente zum Einsatz, um den genannten Ausfallerscheinungen Rechnung zu tragen.

In der JP-A 2001347323 wird ein stationäres Hitzeschild beschrieben, das eine sandwichartig aufgebaute Struktur aufweist und eine Vielzahl gleichmäßiger oder ungleichmäßiger tal- und bergförmig ausgebildeter Profilierungen aufweist. Dieses Hitzeschild wird über Schrauben mit dem abzuschirmenden Bauteil fest verbunden. Das Hitzeschild ist einstückig ausgebildet und im Wesentlichen an die Form des abzuschirmenden Bauteiles angepasst. Die bereits zum allgemeinen Stand der Technik angeführten Nachteile sind auch hier gegeben.

Je nach Komplexität des abzuschirmenden Bauteiles besteht jedoch nicht immer die Möglichkeit, ein einteiliges Hitzeschild vorzusehen.

Der Erfindung liegt die Aufgabe zugrunde, ein auch an komplexe Strukturen eines abzuschirmenden Bauteiles anpassbares Hitzeschild bereitzustellen, das thermische Längenänderungen des Bauteiles problemlos ausgleichen kann, ohne dass sich die aufgezeigten technischen Probleme einstellen.

Diese Aufgabe wird gelöst durch ein aus mehreren Elementen zusammengesetztes Hitzeschild zur Abschirmung von unter Temperatureinfluss stehenden Bauteilen, gebildet durch der jeweiligen Kontur des abzuschirmenden Bauteiles im Wesentlichen angepasste Elemente, die einander zumindest partiell überlappen, wobei die Elemente im Überlappungsbereich zumindest punktuell fixiert, jedoch relativ zueinander beweglich vorgesehen sind.

Vorteilhafte Weiterbildungen des Erfindungsgegenstandes sind den Unteransprüchen zu entnehmen.

Durch Einsatz eines aus mehreren Elementen zusammengesetzten Hitzeschildes, dessen einzelnen Elemente relativ zueinander bewegbar sind, können nun auch kompliziertere Strukturen des abzuschirmenden Bauteiles problemlos nachempfunden werden, ohne dass es zu den eingangs angeführten technischen Problemen kommt. Die einzelnen Elemente sind im Bereich ihrer Fixierung relativ zueinander bewegbar, um den thermischen Längenänderungen des abzuschirmenden Bauteiles Rechnung zu tragen.

Zum Einsatz gelangt mindestens ein Fixierungselement, das im Bereich benachbarter Elemente vorgesehen wird. Das Fixierungselement sorgt dafür, dass die benachbarten Elemente im Bereich mindestens eines Punktes fixiert werden können, jedoch gegeneinander beweglich gelagert sind, so dass thermische Längenänderungen des Bauteiles, insbesondere eines Fahrzeug-Abgaskrümmers, ohne Schäden am Hitzeschild ausgeglichen werden können.

Gegenüber dem Stand der Technik werden darüber hinaus folgende Vorteile erreicht
- Verhinderung von Spannungsrissen am Hitzeschild,
- Reduzierung von Befestigungspunkten der einzelnen Elemente,
- bewegliche Verbindung zweier oder mehrerer Elemente eines Hitzeschildes,
- logistisch ist ein einzelnes Hitzeschild, gebildet aus mehreren Elementen, gegeben,
- komplexe Geometrien der abzuschirmenden Bauteile sind darstellbar.

Da die benachbarten Elemente einander zumindest partiell überlappen, kann es ausreichen, zu Lagerungs-, Transport- und Montagezwecken lediglich im Bereich eines einzelnen Punktes die benachbarten Elemente gelenkig miteinander zu verbinden. Sollte dies nicht ausreichen, können natürlich auch mehrere Fixierungspunkte vorgegeben werden.

Einem weiteren Gedanken der Erfindung gemäß ist in einem Endbereich eines Elementes ein etwa laschenartig ausgebildeter Ansatz vorgesehen, der in Richtung des benachbarten Elementes weist. Der Fixierungspunkt kann dann im Bereich des laschenartigen Ansatzes vorgesehen werden.

Das Fixierungselement selber ist vorteilhafterweise etwa kreuzförmig ausgebildet, wobei die parallel zu den Elementen verlaufenden Schenkelbereiche Gleitflächen für die einzelnen Elemente relativ zueinander bilden, um thermische Längenänderungen des abzuschirmenden Bauteiles auszugleichen.

Je nach Anwendungsfall kann es sinnvoll sein, aus den Materialien der benachbarten Elemente in Richtung des jeweiligen Schenkelbereiches weisende Profile herauszuformen, so dass punktförmige Gleitelemente gebildet werden. Der nicht parallel zu den Elementen verlaufende Schenkel des Fixierungselementes kann als Hohlkörper ausgebildet werden, wobei die freien Schenkelenden zumindest ansatzseitig in Richtung des Ansatzes umgebogen, insbesondere umgebördelt werden.

Ebenfalls denkbar ist, dass der Hohlkörper ein Niet aufnimmt, über welches dann eine gelenkige Verbindung zwischen den benachbarten Elementen herbeigeführt wird. Der Fachmann wird die jeweilige Art der Verbindung vom Anwendungsfall abhängig machen.

Der Erfindungsgegenstand ist anhand eines Ausführungsbeispiels in der Zeichnung dargestellt und wird wie folgt beschrieben. Es zeigen:
- Figur 1: Räumliche Darstellung eines über ein mehrteiliges Hitzeschild abzuschirmenden Bauteiles;
- Figur 2: Teildarstellung des Fixierungsbereiches zweier Elemente eines Hitzeschildes.

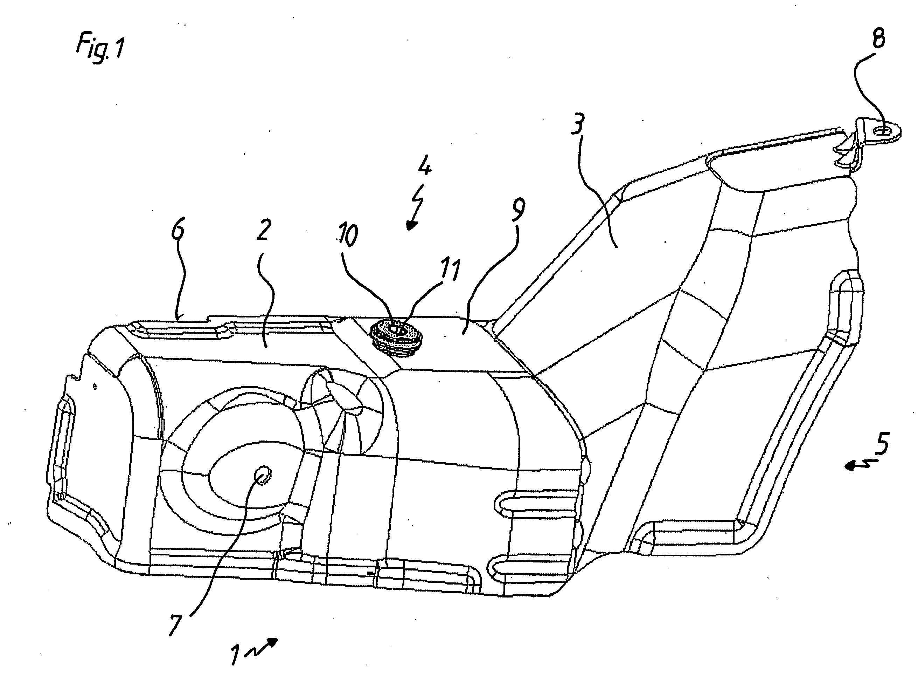

Figur 1 zeigt in räumlicher Darstellung ein Hitzeschild 1, das in diesem Beispiel aus zwei Elementen 2,3 bestehen soll. Das Hitzeschild 1 soll ebenfalls in diesem Beispiel einen hier nur andeutungsweise erkennbaren Abgaskrümmer 4 abschirmen. Der Abgaskrümmer ist Teil eines Abgasstranges, der im Bereich 5 beispielsweise einen Abgaslader beinhalten kann. Erkennbar sind die motorseitig vorgesehenen Anschlussbereiche 6 des Abgaskrümmers 4, der in Richtung des Bereiches 5 eine räumlich komplexe Struktur beinhaltet. Demzufolge sind die einzelnen Elemente 2,3 konturenmäßig ebenfalls unterschiedlich ausgebildet, d.h. in etwa der räumlichen Struktur des Abgaskrümmers 4 angepasst. Das Element 2 weist einen . Befestigungsbereich 7 am Abgaskrümmer 4 und das Element 3 einen Befestigungsbereich 8 am Abgaslader 5 auf, mittels welchen sie fest gegenüber den genannten Bauteilen verlagert werden. Bei den in diesem Beispiel zum Einsatz gelangenden Bauteilen 4,5 treten unterschiedliche Temperaturen auf Der Bereich des Abgasladers 5 weist hierbei ein höheres Temperaturniveau als derjenige des Abgaskrümmers 4 auf, so dass unterschiedliche thermische Ausdehnungen im Bereich des Hitzeschildes 1 gegeben sind, die sich unterschiedlich auf die einzelnen Elemente 2,3 auswirken.

Am Element 3 ist ein, in Richtung des Elementes 2 weisender laschenartig ausgebildeter Ansatz 9 vorgesehen, der im Beriech seines freien Endes ein Langloch 10 aufweist, das zur Aufnahme eines Fixierungselementes 11 dient. Über das hier nur angedeutete Fixierungselement 11 werden die Elemente 2,3 zueinander festgelegt, wobei jedoch eine relative Beweglichkeit der beiden Elemente 2,3 zueinander gegeben ist. Dies ist dieser Figur nicht zu entnehmen.

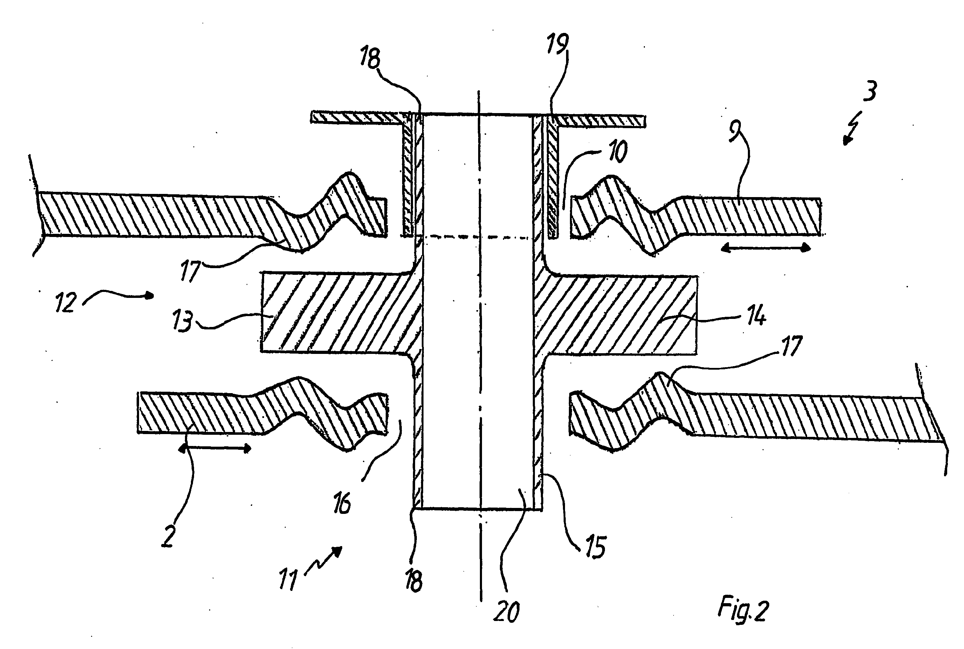

Figur 2 zeigt den Fixierungsbereich 12. Zum Einsatz gelangt das bereits in Figur 1 dargestellte Fixierungselement 11; das in diesem Beispiel kreuzförmig ausgebildet ist und über parallel zu den Elementen 2,3 verlaufende Schenkelbereiche 13,14 verfügt. Der senkrecht zu den Schenkelbereichen 13,14 verlaufende Schenkel 15 des Fixierungselementes 11 ist hohl ausgeführt. Vom Element 3 ist lediglich der laschenartig ausgebildete Ansatz 9 erkennbar. Gleiches gilt für das Langloch 10. Das Element 2 ist im Überlappungsbereich zum Element 3 ebenfalls mit einer Ausnehmung 16 versehen, die dem Langloch 10 gegenüberliegt. Das Fixierungselement 12 ragt somit mit seinem Schenkel 15 einerseits durch das Langloch 10 und anderseits durch die Ausnehmung 16 hindurch, während die Schenkelbereiche 13,14 Gleitbereiche bilden, so dass bei Relativbewegungen der Elemente 2,3 zueinander ein entsprechender Ausgleich stattfinden kann, ohne dass es zu Spannungsrissen im Bereich der Elemente 2,3 kommt. Bedarfsweise können einerseits am laschenartigen Ansatz 9 und andererseits am Überlappungsbereich des Elementes 2 in Richtung des jeweiligen Schenkelbereiches 13,14 weisende Profile 17 am jeweiligen Element 2,3 angeformt werden, über welche dann eine punktuelle Gleitbewegung des jeweiligen Elementes 2,3 gegenüber dem zugehörigen Schenkelbereich 13,14 herbeigeführt werden kann. Damit das Fixierungselement 11 nicht lose zwischen den Elementen 2,3 vorgesehen ist, besteht einerseits die Möglichkeit, zumindest eines der freien Enden 18 des Schenkels 15 beispielsweise in Richtung des laschenartigen Ansatzes 9 umzubördeln. Bedarfsweise kann dies auch im Bereich beider freier Enden 18 vorgenommen werden. Ebenfalls denkbar ist im Bereich mindestens eines der beiden Enden 18 ein separates Niet 19 vorzusehen.

Alternativ besteht auch die Möglichkeit, durch den Hohlraum 20 hindurch ein Niet zu führen (nicht dargestellt) und dies in den Endbereichen dann unter Bildung eines Nietkopfes platt zu drücken.

## Patentansprüche

1. Aus mehreren Elementen (2,3) zusammengesetztes Hitzeschild (1) zur Abschirmung von unter Temperatureinfluss stehenden Bauteilen (4,5), gebildet durch der jeweiligen Kontur des abzuschirmenden Bauteiles (4,5) im Wesentlichen angepasste Elemente (2,3), die einander zumindest partiell überlappen, wobei die Elemente (2,3) im Überlappungsbereich zumindest punktuell fixiert (11), jedoch relativ zueinander beweglich vorgesehen sind.

2. Hitzeschild nach Anspruch 1, **dadurch gekennzeichnet, dass** im Bereich mindestens eines der Elemente (3) mindestens ein in Richtung eines benachbarten Elementes (2) weisender etwa laschenartig ausgebildeter Ansatz (9) angeordnet ist, in dessen Verlauf die Fixierung (11) mit dem benachbarten Element (2) vornehmbar ist.

3. Hitzeschild nach Anspruch 1 oder 2, **dadurch gekennzeichnet, dass** sowohl ansatzseitig als auch im darunter liegenden Bereich des benachbarten Elementes (2) mindestens eine Ausnehmung (10,16) zur Aufnahme eines Fixierungselementes (11) vorgesehen ist.

4. Hitzeschild nach einem der Ansprüche 1 bis 3, **dadurch gekennzeichnet, dass** das Fixierungselement (11) im Querschnitt etwa kreuzförmig ausgebildet ist, wobei die einzelnen Elemente (2,3) auf den parallel zu ihnen verlaufenden Schenkelbereichen (13,14) des Fixierungselementes (11) in gleitender Weise relativ zueinander beweglich vorgesehen sind.

5. Hitzeschild nach einem der Ansprüche 1 bis 3, **dadurch gekennzeichnet, dass** zumindest eine der Ausnehmungen (10) als Langloch ausgebildet ist.

6. Hitzeschild nach einem der Ansprüche 1 bis 5, **dadurch gekennzeichnet, dass** zumindest Teilbereiche der Elemente (2,3) in den Schenkelbereichen (13,14) mit in Richtung der Schenkelbereiche (13,14) weisenden Profilen (17) versehen sind.

7. Hitzeschild nach einem der Ansprüche 1 bis 6, **dadurch gekennzeichnet, dass** zumindest der ansatzseitig vorgesehenen, nicht parallel zu den Elementen (2,3) verlaufende Schenkel (15) des Fixierungselementes (11) in Richtung des Ansatzes (9) abgebogen, insbesondere umgebördelt ist.

8. Hitzeschild nach einem der Ansprüche 1 bis 7, **dadurch gekennzeichnet, dass** der Schenkel (15) des Fixierungselementes (11) hohl ausgebildet und bedarfsweise zur Aufnahme eines separaten Verbindungselementes, insbesondere eines Niets, vorgesehen ist.

9. Hitzeschild nach einem der Ansprüche 1 bis 8, **dadurch gekennzeichnet, dass** das Hitzeschild (1) im Bereich eines Fahrzeug-Abgaskrümmers (4), bedarfsweise in Zusammenwirken mit einem Abgaslader, einsetzbar ist.

## Claims

1. Heat shield (1) made up of a plurality of elements (2, 3) for shielding components (4, 5) exposed to the effects of temperature, formed by elements (2, 3) substantially adapted to the relevant outline of the component (4, 5) to be shielded, said elements at least partially overlapping one another whereby the elements (2, 3) in the overlapping region are fastened at least at points (11) but are movable in relation to each other.

2. Heat shield according to claim 1, **characterised in that** in the region of at least one of the elements (3) is disposed at least one shoulder (9) pointing towards an adjacent element (2) that is approximately strap-like, in the course of which shoulder it is possible to create the fastening (11) to the adjacent element (2).

3. Heat shield according to claim 1 or 2, **characterised in that** both on the shoulder side and also in the region beneath the adjacent element (2) at least one cut-out (10, 16) is provided for receipt of a fastening element (11).

4. Heat shield according to one of claims 1 to 3, **characterised in that** the fastening element (11) is approximately cruciform in cross-section whereby the individual elements (2, 3) are provided on the leg regions (13, 14) of fastening element (11) running parallel to them and are movable in relation to each other in a sliding manner.

5. Heat shield according to one of claims 1 to 3, **characterised in that** at least one of the cut-outs (10) is formed as a slot.

6. Heat shield according to one of claims 1 to 5, **characterised in that** at least partial regions of the elements (2, 3) in the leg regions (13, 14) are provided with profiles (17) pointing towards said leg regions (13, 14).

7. Heat shield according to one of claims 1 to 6, **characterised in that** at least the leg (15) of the fastening element (11) provided on the shoulder side and not running parallel to the elements (2, 3) is folded towards the shoulder (9), particularly is flattened down.

8. Heat shield according to one of claims 1 to 7, **characterised in that** the leg (15) of the fastening element (11) is hollow and is provided if necessary for accommodating a separate joining element, in particular a rivet.

9. Heat shield according to one of claims 1 to 8, **characterised in that** the heat shield (1) may be used in the region of a motor vehicle exhaust manifold (4), if necessary in co-operation with an exhaust-driven charger.

## Revendications

1. Pare-chaleur (1) composé de plusieurs éléments (2, 3), conçu pour isoler des pièces structurelles (4, 5) soumises à une influence thermique, et formé par des éléments (2, 3) qui sont, pour l'essentiel, adaptés au profil considéré de la pièce structurelle (4, 5) devant être isolée, et se chevauchent mutuellement au moins en partie, sachant que lesdits éléments (2, 3) sont verrouillés à demeure (11) au moins ponctuellement, dans la zone de chevauchement, mais sont toutefois prévus avec mobilité relative.

2. Pare-chaleur selon la revendication 1, **caractérisé par le fait qu'**au moins un appendice (9), sensiblement réalisé en forme de patte, est disposé dans la région d'au moins l'un (3) des éléments et pointe en direction d'un élément voisin (2), le verrouillage à demeure (11) sur ledit élément voisin (2) pouvant être effectué sur l'étendue dudit appendice.

3. Pare-chaleur selon la revendication 1 ou 2, **caractérisé par le fait qu'**au moins un évidement (10, 16) est prévu, tant du côté de l'appendice que dans la région de l'élément voisin (2) sous-jacente audit appendice, afin de recevoir un élément (11) de verrouillage à demeure.

4. Pare-chaleur selon l'une des revendications 1 à 3, **caractérisé par le fait que** l'élément (11) de verrouillage à demeure est réalisé avec section transversale sensiblement cruciforme, les éléments individuels (2, 3) étant prévus avec mobilité relative, par glissement, sur les zones (13, 14) formant branches dudit élément (11) de verrouillage à demeure qui s'étendent parallèlement auxdits éléments.

5. Pare-chaleur selon l'une des revendications 1 à 3, **caractérisé par le fait qu'**au moins l'un (10) des évidements est réalisé sous la forme d'un trou oblong.

6. Pare-chaleur selon l'une des revendications 1 à 5, **caractérisé par le fait qu'**au moins des régions partielles des éléments (2, 3) sont munies, dans les zones (13, 14) formant branches, de profils (17) pointant dans la direction desdites zones (13, 14) formant branches.

7. Pare-chaleur selon l'une des revendications 1 à 6, **caractérisé par le fait qu'**au moins la branche (15) de l'élément (11) de verrouillage à demeure, prévue du côté de l'appendice et ne s'étendant pas parallèlement aux éléments (2, 3), est coudée et notamment rabattue en direction dudit appendice (9).

8. Pare-chaleur selon l'une des revendications 1 à 7, **caractérisé par le fait que** la branche (15) de l'élément (11) de verrouillage à demeure est de réalisation creuse et est prévue pour recevoir, au besoin, un élément distinct de solidarisation se présentant, en particulier, comme un rivet.

9. Pare-chaleur selon l'une des revendications 1 à 8, **caractérisé par le fait que** ledit pare-chaleur (1) peut être utilisé dans la région d'un collecteur d'échappement (4) de véhicule, si besoin est en coopération avec un turbocompresseur.
